# EUROPÄISCHE PATENTSCHRIFT

(11) **EP 1 591 977 B1**
(45) Veröffentlichungstag und Bekanntmachung des Hinweises auf die Patenterteilung: **19.03.2008**
(21) Anmeldenummer: 05009334.3
(22) Anmeldetag: 28.04.2005
(51) Int. Cl.: G08B 25/04, G08C 19/02

(54) **Verfahren zur Signalisierung von Alarmzuständen an einem Feldgerät der Automatisierungstechnik**
Method for signalling of alarm conditions of a field device used in automation technology
Procédé de signalisation la condition d'alarme d'un appareil de champ de la technologie d'automatisation

(30) Priorität: 30.04.2004 DE 102004021750
(43) Veröffentlichungstag der Anmeldung: 02.11.2005
(73) Patentinhaber: Endress + Hauser Conducta Gesellschaft für Mess- und Regeltechnik mbH + Co.KG., 70839 Gerlingen (DE)
(72) Erfinder: Buttmann, Marc, 70839 Gerlingen (DE); Gehrke, Martin, 71384 Weinstadt (DE)
(74) Vertreter: Andres, Angelika Maria

(56) Entgegenhaltungen:
- DE-A1- 3 934 007
- US-A- 5 742 225
- US-B1- 6 285 094

## Beschreibung

Die Erfindung betrifft ein Verfahren zur Signalisierung von Alarmzuständen an einem Feldgerät der Automatisierungstechnik.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massendurchflussmessgeräte, Druck- und Temperaturmessgeräte, pH-Redoxpotential-Messgeräte, Leitfähigkeitsmessgeräte etc., die als Sensoren die entsprechenden Prozessvariablen Füllstand, Durchfluss, Druck, Temperatur, pH-Wert bzw. Leitfähigkeitswert erfassen.

Zur Beeinflussung von Prozessvariablen dienen so genannte Aktoren, z. B. Ventile, die den Durchfluss einer Flüssigkeit in einem Rohrleitungsabschnitt steuern.

Eine Vielzahl derartiger Feldgeräte wird von der Fa. Endress + Hauser hergestellt und vertrieben.

Häufig sind Feldgeräte über eine 4-20mA-Stromschleife mit übergeordneten Einheiten verbunden. Diese übergeordneten Einheiten können zur Prozesssteuerung, Prozessvisualisierung oder Prozessüberwachung dienen. Eine Vielzahl der heutigen im Einsatz befindlichen Feldgeräte sind Zweidraht- bzw. Vierdraht- Geräte. Zweileitergeräte sind über ein Leitungspaar mit einer Empfängereinheit, die als übergeordnete Einheit dient, verbunden. Diese Geräte werden ausschließlich über die Signalleitung mit Strom versorgt. Der Strom, der über die Signalleitung fließt, dient zur Signalübertragung zwischen dem Feldgerät und der Empfängereinheit. Ein industrieller Standard für diese Art der Signalübertragung ist die 4-20 mA Technik.

Bei Zweileitergeräten ist die zur Verfügung stehende Eingangsleistung erheblich beschränkt. Die Elektronik im Feldgerät muss so ausgelegt sein, dass sie auch bei einem minimalen Signalstrom von 4mA noch zuverlässig arbeitet. In der Regel ist ein Mikroprozessor in der Elektronik vorhanden, der zur Messwertverarbeitung dient, und der ein Strom von 3,8mA benötigt. Alarmzustände können aufgrund der geringen zur Verfügung stehenden Eingangsleiste nur auf der Empfängerseite einem Benutzer signalisiert werden.

Von der NAMUR, einer Interessenvertretung von Anwendem der Mess-und Regelungstechnik in der chemischen Industrie, sollen gemäß einer Empfehlung NE43 Alarmzustände über Ströme außerhalb des dem Messwert zugeordneten Strombereichs signalisiert werden, d. h. der Fehlerstrom sollte unter 3,8mA oder über 20,5mA liegen.

Bisherige Zweidrahtgeräte haben keine Möglichkeit der Signalisierung von solche Alarmzuständen direkt am Feldgerät.

DE 3 934 007 zeigt eine Zweidraht-Fernmeßeinrichtung.

Bei Vierdraht-Geräten steht ein zusätzliches Leitungspaar für die Energieversorgung zur Verfügen. Diese Geräte sind deshalb im Hinblick auf die zur Verfügung stehende Leistung weniger eingeschränkt.

Aufgabe der vorliegenden Erfindung ist es deshalb, ein Verfahren zur Signalisierung von Alarmzuständen an einem Feldgerät der Automatisierungstechnik anzugeben, das die oben genannten Nachteile nicht aufweist, das insbesondere eine Signalisierung von Alarmzuständen direkt an einem Zweidraht-Feldgerät ermöglicht.

Gelöst wird diese Aufgabe durch die in Anspruch 1 angegebenen Merkmale.

Vorteilhafte Weiterentwicklungen der Erfindung sind in den Unteransprüchen angegeben.

Die wesentliche Idee der Erfindung besteht darin, dass wenn ein Fehlerfall im Feldgerät auftritt, ein Fehlerstrom eingestellt wird, der über dem minimalen Signalstrom liegt und dass mindestens ein Teil der damit zusätzlich im Feldgerät zur Verfügung stehenden Leistung zur Ansteuerung einer dem Fehlerzustand anzeigenden Signaleinheit dient.

Damit ist eine Signalisierung von Alarmzuständen auch bei Zweidraht-Feldgeräten möglich.

Gemäß einer Weiterentwicklung der Erfindung liegt der Fehlerstrom über dem maximalen Signalstrom. Dadurch steht erheblich mehr Leistung für die Signaleinheit zur Verfügung.

Gemäß einem bevorzugten Ausführungsbeispiel handelt es sich bei dem Feldgerät um ein 4-20mA Zweidraht-Gerät.

Als Signaleinheit kann vorteilhaft z. B. eine Leuchtdiode oder eine Signallampe eingesetzt werden.

Alternativ kann auch ein Relais als Signaleinheit dienen.

Insbesondere im Bereich der Chemischen Industrie werden derartige Zwei-Draht-Geräte eingesetzt. Deshalb sollte das Feldgerät der NAMUR-Empfehlung NE43 entsprechen.

Nachfolgend ist die Erfindung anhand eines in der Zeichnung dargestellten Ausführungsbeispiels näher erläutert.

Es zeigt:

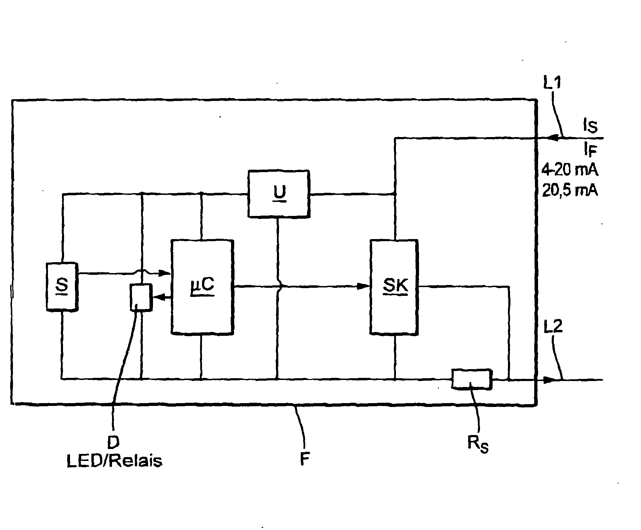

- Fig. 1: schematische Darstellung einer Elektronik eines Feldgerätes (Zwei-Draht-Gerät).

In Fig. 1 ist die Elektronik eines Feldgerätes F näher dargestellt. Diese Elektronik weist eine Sensoreinheit S auf, die zur Erfassung der Prozessvariablen z. B. Druck, Temperatur oder pH-Wert dient. Die Sensoreinheit ist mit einem Mikrocontroller µC verbunden, der zur Auswertung der von der Sensoreinheit S gelieferten Signale dient.

Der Mikrocontroller µC steuert eine Stromsenke SK an, die mittels eines Widerstands R_{S} den über die Versorgungsleitungen L1 bzw. L2 fließenden Signalstroms I_{S} so einstellt, dass er ein Maß für den aktuellen Wert der Prozessvariable ist. Der Signalstrom I_{S} variiert zwischen 4-20 mA. Die beiden Versorgungsleitungen L1, L2 (die Zwei-Draht-Leitung) führen zu einer nicht näher dargestellten Empfängereinheit, die z. B. als übergeordnete Einheit zur Prozesssteuerung dienen kann und die zur Energieversorgung des Feldgerätes F dient.
Für die Spannungsversorgung der einzelnen Komponenten der Elektronik des Feldgerätes F sorgt eine Spannungsversorgungseinheit U.

Der Mikrocontroller µC ist weiterhin mit einer Signaleinheit D verbunden. Bei der Signaleinheit D kann es sich um eine Leuchtdiode LED, eine Signallampe oder ein Relais handeln.

Nachfolgend ist das erfindungsgemäße Verfahren näher erläutert. Wird vom Mikrocontroller µC ein Alarmzustand des Feldgeräts F detektiert, so wird über die Stromsenke SK ein Fehlerstrom I_{F} eingestellt, der >20mA ist.

Ein Alarmzustand kann z. B. ein Sensorausfall, ein Leitungsbruch bei einem Temperatursensor (PT100) oder das Überschreiten eines Grenzwertes für die Prozessvariable sein.

Durch den hohen Fehlerstrom I_{F} steht im Feldgerät F genügend Leistung zur Verfügung um die Signaleinheit D zu betreiben. Dies wird am folgenden Zahlenbeispiel deutlich. Die im Feldgerät zur Verfügung stehenden Leistung beträgt bei einem Signalstrom von 4mA und einer typischen Spannung von 12V 48mW. Im Alarmzustand bei einem Fehlerstrom von I_{F} =20,5mA stehen bei derselben Spannung 246mW zur Verfügung.

Diese Differenz von fast 200mW reicht aus, um eine Leutdiode oder ein sparsames Relais zusätzlich zu der vom Mikrocontroller µC benötigten Leistung von ca. 46mW betreiben zu können. Entsprechend der NAMUR-Empfehlung NE43 soll der Fehlerstrom über 20,5mA liegen. Über das Relais kann z. B. eine Hupe angesteuert werden.

Das Relais kann auch ein externer Relais-Ausgang am Feldgerät sein. Mit Hilfe des erfindungsgemäßen Verfahrens ist eine Signalisierung von Alarmzuständen auch bei Zweidraht-Geräten direkt am Feldgerät F möglich.

Die Erfindung ist auch für HART-Geräte einsetzbar, die neben ein 4-20 mA Signalstromübertragung eine digitale Kommunikation zwischen Feldgerät und übergeordneter Einheit ermöglichen. Eine Ausnahme bilden jedoch die HART-Geräte, die im HART-Multidrop-Betrieb eingesetzt werden, da hier der Strom der jedem Gerät zur Verfügung steht auf 4 mA begrenzt ist.

Gegenstand der Erfindung ist selbstverständlich auch ein für das erfindungsgemäße Verfahren angepasstes Feldgerät.

## Patentansprüche

1. Verfahren zur Signalisierung von Alarmzuständen an einem Feldgerät der Automatisierungstechnik, das über eine 2-Draht-Versorgungsleitung von einer Empfängereinheit mit Energie versorgt wird,
wobei der über die 2-Draht-Versorgungsleitung fließende Strom im Normalzustand des Feldgerätes zwischen einem minimalen und maximalen Signalstrom einstellbar ist,
**dadurch gekennzeichnet,**
**dass** im Fehlerfall des Feldgerätes ein über die 2-Draht-Versorgungsleitung fließender Fehlerstrom eingestellt wird, der über dem maximalen Signalstrom liegt und mindestens ein Teil der damit zusätzlich im Feldgerät zur Verfügung stehenden Leistung zur Ansteuerung einer den Fehlerzustand anzeigenden Signaleinheit dient.

2. Verfahren nach einem der vorhergehenden Ansprüche, **dadurch gekennzeichnet, dass** der minimale Signalstrom 4 mA und der maximale Signalstrom 20 mA beträgt.

3. Verfahren nach einem der vorhergehenden Ansprüche, **dadurch gekennzeichnet, dass** die Signaleinheit eine am Gehäuse des Feldgeräts angeordnete Leuchtdiode oder Signallampe ist.

4. Verfahren nach einem der vorhergehenden Ansprüche, **dadurch gekennzeichnet, dass** die Signaleinheit ein Relais ist.

5. Verfahren nach einem der vorhergehenden Ansprüche, **dadurch gekennzeichnet, dass** das Feldgerät der NAMUR-Empfehlung NE43 entspricht.

6. Feldgerät zur Durchführung des in den vorhergehenden Ansprüchen beschriebenen Verfahrens.

## Claims

1. Method for signalling alarm states of a field device used in automation technology, which is supplied with power via a two-wire supply line from a receiver unit, the current which flows via the two-wire supply line being variable in the normal state of the field device between a minimum and maximum signal current,
**characterised**
**in that**, in the event of a fault in the field device, a fault current flowing via the two-wire supply line and lying above the maximum signal current is set and at least some of the power thereby additionally available in the field device serves for activating a signal unit indicating the fault state.

2. Method according to one of the preceding claims, **characterised in that** the minimum signal current is 4 mA and the maximum signal current is 20 mA.

3. Method according to one of the preceding claims, **characterised in that** the signal unit is a light-emitting diode or signal lamp arranged on the housing of the field device.

4. Method according to one of the preceding claims, **characterised in that** the signal unit is a relay.

5. Method according to one of the preceding claims, **characterised in that** the field device complies with NAMUR Recommendation NE43.

6. Field device for carrying out the method described in the preceding claims.

## Revendications

1. Procédé destiné à la signalisation d'états d'alarme sur un appareil de terrain de la technique d'automatisation, qui est alimenté en énergie par l'intermédiaire d'une ligne d'alimentation à deux fils par une unité de réception,
le courant circulant à travers la ligne d'alimentation à deux fils étant réglable, à l'état normal de l'appareil de terrain, entre un courant de signal minimal et maximal,
**caractérisé en ce**
**qu'**en cas de défaut de l'appareil de terrain est réglé un courant de défaut circulant à travers la ligne d'alimentation à deux fils, qui est supérieur au courant de signal maximal et sert au moins à une partie de la puissance supplémentaire disponible dans l'appareil de terrain, en vue de la commande d'une unité de signalisation affichant l'état de défaut.

2. Procédé selon l'une des revendications précédentes, **caractérisé en ce que** le courant de signal minimal est de 4 mA et le courant de signal maximal de 20 mA.

3. Procédé selon l'une des revendications précédentes, **caractérisé en ce que** l'unité de signalisation est une diode électroluminescente ou une lampe de signalisation disposée sur le boîtier de l'appareil de terrain.

4. Procédé selon l'une des revendications précédentes, **caractérisé en ce que** l'unité de signalisation est un relais.

5. Procédé selon l'une des revendications précédentes, **caractérisé en ce que** l'appareil de terrain est conforme à la recommandation NAMUR NE43.

6. Appareil de terrain destiné à la réalisation du procédé décrit dans les revendications précédentes.
